Europäisches Patentamt

European Patent Office

Office européen des brevets

(19)

(11) Veröffentlichungsnummer: **0 126 021**

**A2**

(12) # EUROPÄISCHE PATENTANMELDUNG

(21) Anmeldenummer: **84730035.7**

(22) Anmeldetag: **10.04.84**

(51) Int. Cl.³: **G 01 L 1/22**
**G 01 K 5/00**

(30) Priorität: **12.04.83 DE 3313620**

(43) Veröffentlichungstag der Anmeldung:
**21.11.84 Patentblatt 84/47**

(84) Benannte Vertragsstaaten:
**AT BE CH FR GB IT LI NL SE**

(71) Anmelder: **Lechler, Gerhard, Dr.Ing.**
**Mühlenstrasse 58**
**D-1000 Berlin 46(DE)**

(72) Erfinder: **Lechler, Gerhard, Dr.Ing.**
**Mühlenstrasse 58**
**D-1000 Berlin 46(DE)**

(74) Vertreter: **Böning, Manfred, Dr. Ing. et al,**
**Patentanwälte Dipl.-Ing. Dieter Jander Dr. Ing. Manfred**
**Böning Kurfürstendamm 66**
**D-1000 Berlin 15(DE)**

(54) **Kraftmesseinrichtung.**

(57) Bei einer Einrichtung zum Messen von Kräften mit Hilfe eines Wälzlagers, das an verschiedenen Meßstellen mit Dehnungsmeßstreifen (1, 2) versehen ist, die zum Erfassen von Überrolldehnungen dienen, werden jeweils zwei zu einer Halbbrücke geschaltete Dehnungsmeßstreifen (1, 2) verwendet, die an Materialien mit unterschiedlichen Ausdehnungskoeffizienten angepaßt sind. Durch die Verwendung derartiger unterschiedlicher Dehnungsmeßstreifen (1, 2) lassen sich mit ein und derselben Meßeinrichtung Temperaturen und Kräfte messen, wobei am Mittelabgriff (3) der Halbbrücke anfallende kraftbedingte Wechselspennungsanteile durch ein Filter (6) aus dem Gesamtsignal herausgefiltert werden.

Fig. 1

EP 0 126 021 A2

Croydon Printing Company Ltd.

**0126021**

Kraftmesseinrichtung

Die Erfindung betrifft eine Einrichtung zum Messen von Kräften mit Hilfe mindestens eines Wälzlagers, dessen Aussen- und/oder Innenring mit an verschiedenen Meßstellen angeordneten Dehnungsmeßstreifen versehen sind bzw. ist, die zum Erfassen von Überrolldehnungen dienen, wobei jeweils mindestens zwei Dehnungsmeßstreifen als Halbbrücke geschaltet sind.

Einrichtungen der vorstehenden Art mit drei, vier oder mehr Dehnungsmeßstreifen sind aus der DE-PS 29 11 479 bekannt. Bei den bekannten Einrichtungen werden Dehnungsmeßstreifen verwendet, die sämtlich an ein Material mit dem gleichen Ausdehnungskoeffizienten angepaßt, d.h. in der Praxis auf einen Wälzlagerstahl, insbesondere 100 Cr 6, abgestimmt sind. Der Grund für diese Art der Auswahl der Dehnungsmeßstreifen besteht darin, daß man bei Kraftmessungen generell temperaturbedingte Einflüsse auf das Meßsignal klein halten will und geglaubt wurde, daß dieses Ziel nur durch den Einsatz von an ein Material mit dem gleichen Ausdehnungskoeffizienten angepaßten Dehnungsmeßstreifen erreichbar sei. In Fällen, in denen man zusätzlich die Temperatur des Wälzlagers messen wollte, bediente man sich den Herstellungsaufwand der Meßeinrichtung erhöhender, zusätzlicher Temperaturfühler, z.B. in Form von aufklebbaren Thermoelementen. Die vorstehend angedeutete Einschätzung der Situation, d.h. die Auffassung, daß es bei Einrichtungen der genannten Art besonderer Temperaturfühler bedarf, um auch die Lagertemperaturen erfassen zu können, hat sich als unzutreffend erwiesen. Ausgehend von dieser Erkenntnis liegt der Erfindung die Aufgabe zugrunde, eine Einrichtung der in Betracht gezogenen Gattung zu schaffen, mit der man ohne Zuhilfenahme zusätzlicher Temperaturfühler, d.h. allein unter Verwendung von Dehnungsmeßstreifen sowohl auf das Lager einwirkende Kräfte als auch die im Lager herrschenden Temperaturen erfassen kann.

Diese Aufgabe wird erfindungsgemäß dadurch gelöst, daß der eine Dehnungsmeßstreifen der beiden als Halbbrücke geschalteten Dehnungsmeßstreifen an ein Material mit einem anderen Ausdehnungskoeffizienten angepaßt ist als der andere Dehnungsmeßstreifen der Halbbrücke, daß das einen temperatur- bedingten Gleichspannungsanteil sowie einen kraft- bedingten Wechselspannungsanteil aufweisende, am Mittelabgriff der Halbbrücke abgegriffene Signal einem Filter zum Herausfiltern des Wechselspannungsanteils zuführbar ist und daß die getrennten Anteile durch jeweils ein Anzeigegerät erfaßbar sind.

Die erfindungsgemäße Einrichtung, die mit einer vorgefaßten Meinung bricht, bietet den Vorteil, daß ohne Erhöhung des Fertigungs- und Materialaufwandes mit ein und denselben Dehnungsmeßstreifen einer Meßeinrichtung sowohl Kräfte als auch Temperaturen gemessen werden können.

Die Erfindung wird im folgenden anhand der beigefügten Zeichnung näher erläutert. Es zeigen:

Figur 1 schematisch die Anordnung der wesentlichen Teile einer ersten Einrichtung,

Figur 2 schematisch die Anordnung der wesentlichen Teile einer zweiten Einrichtung und

Figur 3 schematisch die Anordnung der wesentlichen
Teile einer dritten Einrichtung.

In den Figuren werden für einander entsprechende
Bauteile jeweils gleiche Bezugszeichen verwendet.

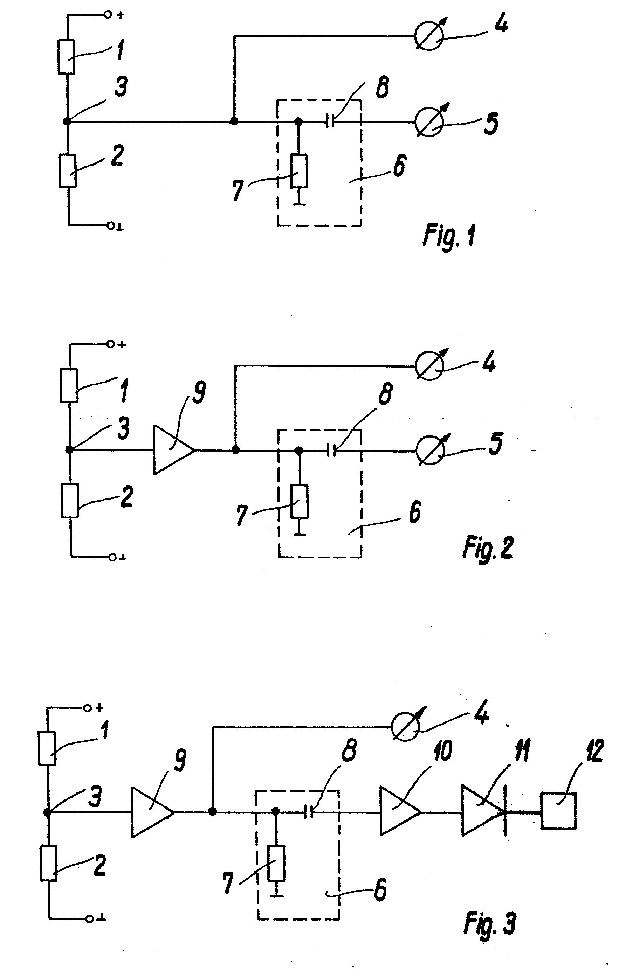

In Figur 1 sind 1 und 2 zwei Dehnungsmeßstreifen,
die an Materialien mit stark unterschiedlichen
Ausdehnungskoeffizienten angepaßt sind. Derartige
Dehnungsmeßstreifen können listenmässig bei verschiedenen Herstellern bezogen werden. Als besonders vorteilhaft hat sich die Verwendung eines an
Stahl und eines an Aluminium angepaßten Dehnungsmeßstreifens erwiesen.

Das am Mittelabgriff 3 der Halbbrücke anfallende
Signal wird einerseits einem Anzeigegerät 4 und
andererseits einem Anzeigegerät 5 zugeführt, wobei dem Anzeigegerät 5 ein als RC-Glied ausgebildetes Filter 6 mit einem Widerstand 7 und einem
Kondensator 8 vorgeschaltet ist. Das Filter 6 dient
zum Herausfiltern des Wechselspannungsanteils aus
dem von der Halbbrücke kommenden Signal.

Die Anordnung gemäß Figur 2 entspricht weitgehend
der Anordnung gemäß Figur 1. Im Falle der Figur 2
werden die am Mittelabgriff 3 anfallenden Signale,
bevor sie zum Anzeigegerät 4 und zum Filter 6 gelangen, durch einen Verstärker 9 verstärkt. In
der Praxis wird der Einsatz eines solchen Verstärkers regelmässig unvermeidbar sein.

Bei der Einrichtung gemäß Figur 3 handelt es sich
um eine Weiterentwicklung der Einrichtung gemäß
Figur 2. Die Einrichtung gemäß Figur 3 unterscheidet sich von der Einrichtung gemäß Figur 2 dadurch, daß dem Filter 6 ein weiterer Verstärker 10 und
ein Gleichrichter 11 nachgeschaltet sind. 12
ist ein schreibendes Anzeigegerät.

Patentansprüche :

1. Einrichtung zum Messen von Kräften mit Hilfe mindestens eines Wälzlagers, dessen Aussen- und/oder Innenring mit an verschiedenen Meßstellen angeordneten Dehnungsmeßstreifen (1,2) versehen sind bzw. ist, die zum Erfassen von Überrolldehnungen dienen, wobei jeweils mindestens zwei Dehnungsmeßstreifen (1,2) als Halbbrücke geschaltet sind, dadurch gekennzeichnet, daß der eine Dehnungsmeßstreifen (1) der beiden als Halbbrücke geschalteten Dehnungsmeßstreifen (1,2) an ein Material mit anderem Ausdehnungskoeffizienten angepaßt ist als der andere Dehnungsmeßstreifen (2) der Halbbrücke, daß das einen temperaturbedingten Gleichspannungsanteil sowie einen kraftbedingten Wechselspannungsanteil aufweisende am Mittelabgriff (3) der Halbbrücke abgegriffene Signal einem Filter (6) zum Herausfiltern des Wechselspannungsanteils zuführbar ist und daß die getrennten Anteile durch jeweils ein Anzeigegerät (4,5,12) erfaßbar sind.

2. Einrichtung nach Anspruch 1, dadurch gekennzeichnet, daß zwischen dem Mittelabgriff (3) der Halbbrücke und dem Filter (6) ein Verstärker (9) angeordnet ist.

3. Einrichtung nach Anspruch 1 oder 2, dadurch gekennzeichnet, daß dem Filter (6) eine einen Verstärker (10) und einen Gleichrichter (11) aufweisende Auswertschaltung nachgeschaltet ist.

4. Einrichtung nach einem der Ansprüche 1 bis 3, dadurch gekennzeichnet, daß das Filter (6) von einem RC-Glied gebildet wird.

- 6 -

5. Einrichtung nach einem der Ansprüche 1 bis 4, dadurch gekennzeichnet, daß die beiden Dehnungsmeßstreifen (1,2) der Halbbrücke an Materialien mit stark unterschiedlichen Ausdehnungskoeffizienten angepaßt sind.

6. Einrichtung nach Anspruch 5, dadurch gekennzeichnet, daß der eine Dehnungsmeßstreifen (1) an Stahl und der andere Dehnungsmeßstreifen (2) an Aluminium angepaßt ist.

1/1 0126021

Fig. 1

Fig. 2

Fig. 3